# EUROPÄISCHE PATENTSCHRIFT

(11) **EP 1 682 808 B1**
(45) Veröffentlichungstag und Bekanntmachung des Hinweises auf die Patenterteilung: **24.08.2011**
(21) Anmeldenummer: 04714730.1
(22) Anmeldetag: 26.02.2004
(51) Int. Cl.: F16L 37/088

(54) **STECKVERBINDUNG FÜR ROHR- UND SCHLAUCHLEITUNGEN MIT VERSTÄRKTEM MATERIALQUERSCHNITT**
PLUG-IN CONNECTION FOR PIPE AND HOSE LINES WITH A REINFORCED MATERIAL CROSS-SECTION
RACCORD ENFICHABLE POUR CONDUITES EN TUYAUX SOUPLES ET RIGIDES A SECTION TRANSVERSALE DE MATERIAU RENFORCEE

(30) Priorität: 15.10.2003 DE 10347929
(43) Veröffentlichungstag der Anmeldung: 26.07.2006
(73) Patentinhaber: Henn GmbH & Co.KG, 6850 Dornbirn (AT)
(72) Erfinder: HARTMANN, Harald, A-6850 Dornbirn (AT)
(74) Vertreter: Burger, Hannes
(86) Internationale Anmeldenummer: PCT/EP2004/001886
(87) Internationale Veröffentlichungsnummer: WO 2005/047751

(56) Entgegenhaltungen:
- EP-A- 0 559 505
- CA-A- 1 269 683
- US-A- 3 177 018
- US-A- 5 273 323
- US-A- 5 855 399

## Beschreibung

Die Erfindung betrifft eine Steckverbindung für Rohr- und Schlauchleitungen mit verstärktem Materialquerschnitt nach dem Oberbegriff des Patentanspruches 1.

Eine derartige Steckverbindung ist, beispielsweise aus der US5273323A order mit der auf den gleichen Anmelder zurückgehenden EP 0 750 152 B1 bekannt geworden. Der Inhalt dieser Druckschrift soll vollinhaltlich von dem Offenbarungsgehalt der vorliegenden Erfindung umfasst sein.

Bei der bekannten Steckverbindung besteht der Stecker aus einer Innenhülse und aus einer parallel hierzu gerichteten Außenhülse, die im Bereich eines Dichtrings miteinander verbunden sind.

Zwischen den beiden Hülsen wird ein Aufnahmeraum für das Einstecken eines Schlauches gebildet. Der Stecker ist in der bekannten Ausführung bereits im Bereich des Dichtrings doppelwandig ausgebildet.

Nun hat sich herausgestellt, dass die Rastverbindung relativ hohe Steckkräfte aufnehmen muss und axiale Zugkräfte, insbesondere im Bereich der Rastfeder und der der Rastfeder gegenüberliegenden Rastschulter aufgenommen werden müssen.

Bei der EP 0 750 151 B1 ist hierbei die Rastschulter im Bereich der einwandigen Außenhülse in Verbindung mit einem Rastfederdurchbruch im Bereich des Stutzens gebildet.

Bei Einwirkung hoher Trennkräfte auf die Steckverbindung besteht jedoch die Gefahr, dass der steckerseitige Rastfederdurchbruch im Bereich der Außenhülse ab- oder einreißt, wodurch die Gefahr des Ausrastens der Steckverbindung besteht.

Der Erfindung liegt deshalb die Aufgabe zugrunde, eine Steckverbindung der eingangs genannten Art so weiterzubilden, dass sie wesentliche höhere Haltekräfte aufnehmen kann.

Zur Lösung der gestellten Aufgabe ist die Erfindung-dadurch gekennzeichnet, dass der Stecker mindestens im Bereich der Rastfederdurchbrüche doppelwandig ausgebildet ist.

In einer Weiterbildung der Erfindung ist es vorgesehen, dass die mindestens in diesen Bereichen vorgesehenen Doppelwände einen relativ geringen Abstand zueinander haben und parallel zueinander gerichtet sind.

In einer bevorzugten Ausgestaltung der mindestens im Bereich der Rastfederdurchbrüche angeordneten Doppelwände wird es im Übrigen bevorzugt, wenn die Doppelwände in dem Bereich dieser Durchbrüche zusammengequetscht sind und außerhalb des Bereiches dieser Durchbrüche einen gegenseitigen größeren Abstand zueinander einnehmen und dort parallel laufen und durch eine in-radiale Richtung ausgerichtete Stirnwand miteinander verbunden sind.

Mit der gegebenen technischen Lehre ergibt sich der Vorteil, dass die Rastfederdurchbrüche materialverstärkt sind, weil mindestens in diesem Bereich die innen- und Außenhülse des Steckers zusammengeführt sind und parallel zueinander gerichtete und einen geringen Abstand zueinander einnehmende Doppelwände ausbildet.

Damit ist der weitere Vorteil verbunden, dass sich die im Bereich der Rastfederdurchbrüche angeordneten Doppelwände in axialer Richtung nach hinten zu einem entsprechenden ringförmige Aufnahmeraum erweitern, der zum Einstecken eines Schlauches geeignet ist.

Zwar ist dieser besondere Schlauchaufnahmeraum bereits schon aus der eigenen EP 0 750 152 B1 bekannt, jedoch wird dieser Aufnahmeraum nach oben nicht durch doppelwandige Querschnitte ausgebildet, sondern lediglich durch die Parallelstellung einer Innen- und einer Außenhülse.

Erfindungsgemäß ist dieser Aufnahmeraum für den Schlauch nach vorne hin umgebördelt und zusammengequetscht, was mit wesentlich höherer Spreizfestigkeit für diesen Aufnahmeraum verbunden ist.

Der Aufnahmeraum ist daher gegen radiales Aufweiten oder Aufspreizen besser geschützt als vergleichsweise beim Gegenstand der EP 0 750 152 B1.

Bei dieser Druckschrift lag die Außenhülse im Bereich der Rastfederdurchbrüche auf dem Außenumfang des Schlauches auf und wurde von diesem getragen. Hiermit entstand eine gewisse Abstützwirkung.

Bei der vorliegenden Erfindung ist der Rastfederdurchbruch jedoch freitragend und deshalb vorteilhaft doppelwandig ausgeführt. Dies ist mit dem Vorteil verbunden, dass man im Bereich der Rastfederdurchbrüche mit relativ dünnem Materialquerschnitt eine hohe Steifigkeit erzielt, was bei-der EP 0 750 152 B1 nicht der Fall war. Dort mussten relativ große Materialquerschnitte zur Ausbildung der Rastschulter verwendet werden. Insbesondere musste der Bereich des Rastfederdurchbruches im Stutzen und im Stecker besonders materialverstärkt ausgebildet werden, was mit hohen Herstellungskosten verbunden war.

Hier setzt die Erfindung ein, die mit wesentlich dünneren Materialquerschnitten eine überlegene Festigkeit im Bereich der Rastfederdurchbrüche erzielt, so dass bei geringeren Mäterialquerschnitten eine höhere Haltekraft der Steckverbindung besteht.

Der weitere Vorteil der Doppelwandigkeit der Steckverbindung im Bereich der Rastfederdurchbrüche besteht darin, dass der Stecker an seiner vorderen Stirnseite erfindungsgemäß doppelwandig ausgebildet ist, wodurch sich keine scharfen Schnitt- und Verletzungskanten bilden, wie es eventuell bei der EP 0 750 152 B1 der Fall war, weil dort einfache, hochgebogene Kanten mit entsprechender Verletzungsgefahr vorhanden waren.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: ein Teilschnitt durch eine Steckverbindung nach der Erfindung
- Figur 2:: die Stirnansicht der Steckverbindung in Pfeilrichtung II in Figur 1

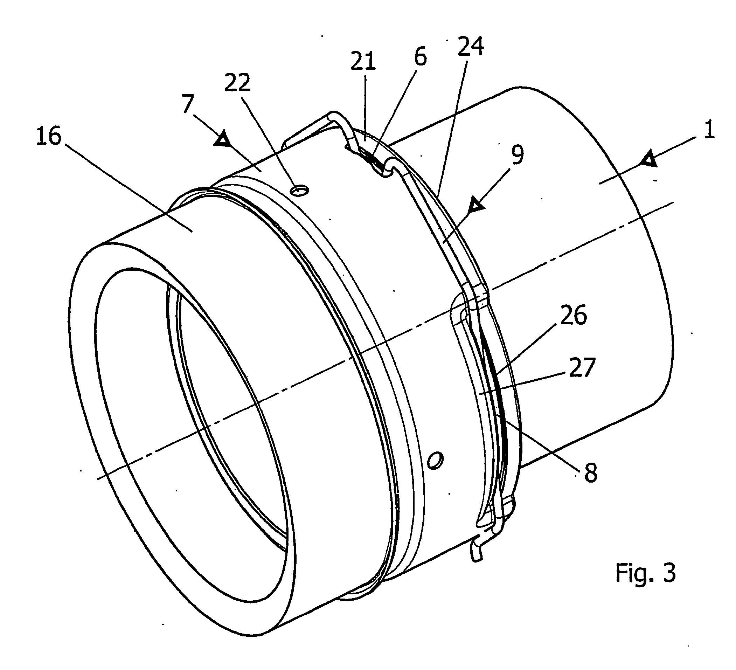

- Figur 3:: die perspektivische Seitenansicht der Steckverbindung nach Figur 1 und 2

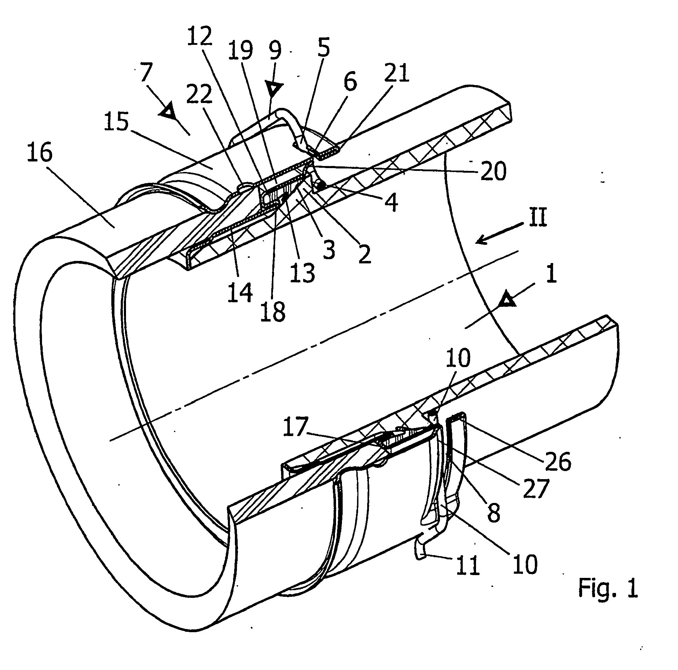

Gemäß Figur 1 wird ein Stutzen 1, der z.B. aus einem Metall oder aus einem Kunststoffmaterial besteht, in einen Stecker 7 eingeführt und dort verrastet.

Der Stutzen 1 besteht im wesentlichen aus einer zylinderförmigen Hülse, an deren Außenumfang eine Rastschulter 2 angeformt ist. In Einsteckrichtung bildet die Rastschulter 2 eine vordere Schräge 3, die nach hinten in eine Rastfläche 4 übergeht.

Die Verrastung mit dem Stecker 7 wird dadurch erreicht, dass der Stecker 7 mit einer etwa U-förmigen Rastfeder 9 verbunden ist, die insgesamt drei unterschiedliche Raststellen ausbildet.

Zwei einander gegenüberliegende Verrastungen werden durch die parallel zueinander angeordneten Rastschenkel 10 der U-förmigen Rastfeder 9 gebildet.

Die Rastschenkel 10 der Rastfeder 9 greifen durch zueinander parallele Rastfederdurchbrüche 8 im Stecker 7 hindurch. An den vorderen freien Enden der Rastschenkel 10 sind jeweils nach außen abgebogene Federenden 11 angeformt.

Eine dritte, mittlere Raststelle wird durch einen Rastbügel 5 gebildet, der durch einen zugeordneten Rastbügeldurchbruch 6 im Stecker 7 hindurchgreift und gegen die Schräge 3 der Rastschulter 2 des Stutzens 1 gerichtet ist und hinter dieser einrastet.

Die Dichtung der Steckverbindung wird durch einen im Stecker 7 montierten Dichtring 12, erbracht, der sich mit seiner schräg nach unten gerichteten Dichtlippe 13 abdichtend an der Schräge 3 der Rastschulter 2.

Erfindungsgemäß besteht der Stecker 7 aus einer im wesentlichen axial gerichteten Innenhülse 14, welche die innere Aufnahmefläche für einen Schlauch 16 bildet. Diese Innenhülse 14 geht in Einsteckrichtung in eine Stülpkante 18 über, die einen Aufnahmeraum zur Aufnahme des Basisschenkel des Dichtrings 12 bildet.

Der Aufnahmeraum für diesen Basisschenkel wird nach oben durch eine zylindrische Anlagefläche 19 der Innenhülse 14 begrenzt, die ihrerseits über eine Schrägfläche 20 in die in axialer Richtung vorne liegende Doppelwand 21 übergeht.

Im Bereich der Doppelwand 21 ist die Innenhülse 14 umgestülpt und setzt sich als Außenhülse 15 fort.

Der Zwischenraum zwischen der Innen- und der Außenhülse 14, 15 wird als Aufnahmeraum für den Schlauch 16 verwendet, der bis zu einer Anschlagkante 17 am Aufnahmeraum für den Dichtring 12 eingeschoben wird und dort anliegt.

Zur Kontrolle, ob der Schlauch 16 weit genug in den Aufnahmeraum zwischen Innen- und Außenhülse 14, 15 eingeschoben ist, trägt die Außenhülse 15 am Durchmesser verteilt angeordnete Gucklöcher 22, durch die hindurch das Schlauchmaterial sichtbar ist.

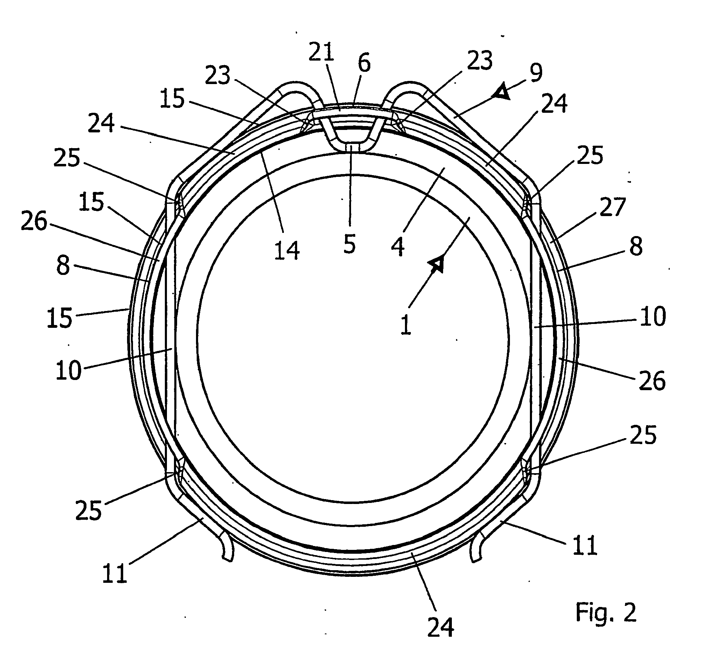

Wichtig ist nun, dass die Doppelwand 21 im Bereich des Rastbügeldurchbruches 6 zusammengequetscht ist, wie es in Figur 2 in der Stirnansicht dargestellt ist. Diese Doppelwand 21 erweitert sich über die seitlich sich daran anschließenden Übergangsbereiche 23 in die parallel zueinander und im gegenseitigen Abstand zueinander angeordneten Innen- und Außenhülse 14, 15, wobei dieser Bereich durch eine Stirnwand 24 verbunden ist.

sich diese Stirnwand 24 wiederum über die Ubergangsbereiche 25 in eine zusammengequetschte Doppelwand 26, die nur für die Länge des Rastfederdurchbruches 8 in dieser Formgebung vorhanden ist. Im Anschluss daran gibt es wiederum den Übergangsbereich 25, der in die Stirnwand 24 größerer Fläche übergeht.

Die Doppelwandigkeit (mit dem Doppelwänden 21 und 26) ist nicht nur rechtsseitig des jeweiligen Rastfederdurchbruches 6, 8, sondern auch linksseitig, wie sich durch den Absatz 27 in Figur 1 und Figur 2 ergibt.

Dieser Absatz bildet den Übergangsbereich zwischen der Innen- und der Außenhülse im Bereich der Durchbrüche 6, 8.

Damit ist ein schmaler Querschnitt der Doppelwand 26 gegeben, der damit besonders hoch lastübertragend ist, weil in diesem Bereich die Außen- und Innenhülse 14, 15 besonders dicht und lastübertragend aneinander anliegen. Gegenüber der eigenen älteren Erfindung EP 0 750 152 B1 konnte damit der Materialquerschnitt des Ausgangsbleches, aus dem der Stecker 7 hergestellt wird, um 60 % verringert werden und hierbei die Haltekraft der Steckverbindung noch wesentlich gesteigert werden.

Es versteht sich von selbst, dass die genannte Steckverbindung mit ihrer Doppelwandigkeit auch aus einem Kunststoffteil hergestellt werden kann und der Stecker 7 mit dem Schlauch 16 ein werkstoffeinstückiges Kunststoffteil bilden kann.

Der Stecker 7 muss deshalb nicht notwendigerweise aus einem Metallteil tiefgezogen werden. Er kann auch im Spritzgießverfahren hergestellt werden.

### Zeichnunaslegende

- 1: Stutzen
- 2: Rastschulter
- 3: Schräge
- 4: Rastfläche
- 5: Rastbügel
- 6: Rastbügeldurchbruch
- 7: Stecker
- 8: Rastfederdurchbruch
- 9: Rastfeder
- 10: Rastschenkel
- 11: Federende
- 12: Dichtring
- 13: Dichtlippe
- 14: Innenhülse
- 15: Außenhülse
- 16: Schlauch
- 17: Anschlagkante
- 18: Stülpkante
- 19: Anlagefläche
- 20: Schrägfläche
- 21: Doppelwand
- 22: Guckloch
- 23: Übergangsbereich
- 24: Stirnwand
- 25: Übergangsbereich
- 26: Doppelwand
- 27: Absatz

## Patentansprüche

1. Steckverbindung für Rohr- und Schlauchleitungen mit verstärktem Materialquerschnitt, bestehend aus einem Stutzen (1), der mindestens eine Rastschulter (2) mit einer Schräge (3) äusbildet und einem mit dem Stutzen verrastbaren Stecker (7), der mindestens eine Rastfeder (9) mit Rastschenkeln (10) trägt, die hinter mindestens einer der Rastschulter (2) des Stutzens (1) einrasten, wobei eine Dichtung der Steckverbindung durch einen im Stecker (7) montierten Dichtring (12) erbracht wird, der einen Basisschenkel und eine schräg nach innen gerichtete Dichtlippe (13) umfasst, wobei sich der Dichtring (12) mit seiner schräg nach innen gerichteten Dichtlippe (13) abdichtend an der Schräge (3) Rastschulter (2) des Stutzens (1) anlegt, und wobei der Stecker (7) aus an der Schräge (3) Rastschulter (2) des Stutzens (1) anlegt, und wobei der Stecker (7) aufs einer Außenhülse (15) besteht und aus einer im wesentlichen axial gerichteten Innenhülse (14) besteht, die eine radial innere Aufnahmefläche für einen Schlauch (16) bildet, die eine radial innere Stülpkante (18) aufweist, aufweist, die zusammen mit einer radial äußeren Anlagefläche (19) der Innenhülse (14) einen Aufnahmeraum zur Aufnahme des Basisschenkels des Dichtrings (12) ausformt, und wobei der Stecker (7) mindestens im Bereich von Rastfederdurchbrüchen (8) doppelwandig (21, 26) ausgebildet ist, **dadurch gekennzeichnet, dass** die Stülpkante (18) doppelwandig ausgebildet ist und radial innen in Gegenüberstellung zur radial äußeren Anlagefläche (19) liegt.

2. Steckverbindung nach Anspruch 1, **dadurch gekennzeichnet, dass** die Doppelwände (21, 26) mindestens im Bereich der Rastfederdurchbrüche (8) zusammengequetscht sind.

3. Steckverbindung nach Anspruch 1 oder 2, **dadurch gekennzeichnet, dass** die Doppelwände (21, 26) außerhalb des Bereiches dieser Rastfederdurchbrüche (8) einen gegenseitigen größeren Abstand zueinander einnehmen, dort parallel laufen und durch eine in radiale Richtung ausgerichtete Stirnwand miteinander verbunden sind.

4. Steckverbindung nach einem der Ansprüche 1 bis 3, **dadurch gekennzeichnet, dass** die Rastfeder (9) U-förming ist und zwei einander gegenüberliegende Verrastungen durch die parallel zueinander angeordneten Rastschenkel (10) der Rastfeder (9) gebildet werden und dass die Rastschenkel (10) der Rastfeder (9) durch zueinander parallele Rastfederdurchbrüche (8) im Stecker (7) hindurch greifen.

5. Steckverbindung nach einem der Ansprüche 1 bis 4, **dadurch gekennzeichnet, dass** eine dritte Raststelle durch einen an der Rastfeder (9) angeordneten Rastbügel (5) gebildet ist, der durch einen, zugeordneten Rastbügeldurchbruch (6) im Stecker (7) hindurchgreift und gegen die Schräge (3) der Rastschulter (2) des Stutzens (1) gerichtet ist und hinter dieser einrastet.

6. Steckverbindung nach einem der Ansprüche 1-5, **dadurch gekennzeichnet, dass** der Aufnahmeraum für den Basisschenkel des Dichtrings (12) nach radial außen durch eine zylindrische Anlagefläche (19) der Innenhülse (14) begrenzt wird, die ihrerseits über eine Schrägfläche (20) in die in axialer Richtung vorne liegende Doppelwand (21, 26) übergeht.

7. Steckverbindung nach Anspruch 6. **dadurch gekennzeichnet, dass** im Bereich der Doppelwand (21, 26) die Innenhülse (14) umgestülpt ist und sich als die Außenhülse (15) fortsetzt.

8. Steckverbindung nach einem der Ansprüche 1 bis 7, **dadurch gekennzeichnet, dass** die Doppelwand (21, 26) im Bereich der Rastfederdurchbrüche (6, 8) zusammengequetscht ist, und sich über die seitlich daran anschließenden Übergangsbereiche (23, 25) in die parallel zueinander und im gegenseitigen Abstand zueinander angeordneten Innen- und Außenhülse (14, 15) erstreckt, wobei dieser Bereich durch eine Stirnwand (24) verbunden ist.

## Claims

1. Plug-in connector for tube and hose lines with a reinforced material cross-section, consisting of a connecting piece (1), which forms at least one locking shoulder (2) with a bevel (3) and a plug (7) which can be locked to the connecting piece and has at least one locking spring (9) with locking legs (10), which lock in behind at least one of the locking shoulders (2) of the connecting piece (1), wherein a seal of the plug-in connector is produced by a sealing ring (12) which is mounted in the plug (7) and comprises a base leg and a sealing lip directed obliquely inwardly, wherein the sealing ring rests with its sealing lip (13) directed obliquely inwardly on the bevel of the locking shoulder (2) of the connecting piece (1) in a sealing manner, and wherein the plug (7) consists of an outer sleeve (15) and a substantially axially directed inner sleeve (14), which forms a radially inner receiving face for a hose (16), which has a radially inner turned-over edge (18), which, together with a radially outer abutment face (19) of the inner sleeve (14), forms a receiving space to receive the base leg of the sealing ring (12), and wherein the plug (7) is double-walled (21, 26) at least in the region of locking spring openings (8), **characterised in that** the turned-over edge (18) is double-walled and is located radially inwardly in an opposing position with regard to the radially outer abutment face (19).

2. Plug-in connector according to claim 1, **characterised in that** the double walls (21, 26) are pinched together at least in the region of the locking spring openings (8).

3. Plug-in connector according to claim 1 or 2, **characterised in that** the double walls (21, 26) outside the region of these locking spring openings (8) adopt a mutual larger spacing with respect to one another, run parallel there and are connected to one another by an end wall oriented in the radial direction.

4. Plug-in connector according to any one of claims 1 to 3, **characterised in that** the locking spring (9) is U-shaped and two mutually opposing locking mechanisms are formed by the locking legs (10), which are arranged parallel to one another, of the locking springs (9) and **in that** the locking legs (10) of the locking spring (9) engage through locking spring openings (8), which are parallel with one another, in the plug (7).

5. Plug-in connector according to any one of claims 1 to 4, **characterised in that** a third locking point is formed by a locking bow (5) which is arranged on the locking spring (9) and engages through an associated locking bow opening (6) in the plug (7) and is directed toward the bevel (3) of the locking shoulder (2) of the connecting piece (1) and locks in behind the latter.

6. Plug-in connector according to any one of claims 1 to 5, **characterised in that** the receiving space for the base leg of the sealing ring (12) is limited radially outwardly by a cylindrical abutment face (19) of the inner sleeve (14), which in turn passes over an oblique face (20) into the double wall (21, 26) located to the front in the axial direction.

7. Plug-in connector according to claim 6, **characterised in that** the inner sleeve (14) is turned over in the region of the double wall (21, 26) and continues as the outer sleeve (15).

8. Plug-in connector according to any one of claims 1 to 7, **characterised in that** the double wall (21, 26) is pinched together in the region of the locking spring openings (6, 8) and extends over the transition regions (23, 25) laterally adjacent thereto into the inner and outer sleeve (14, 15) arranged parallel to one another and at a mutual spacing from one another, this region being connected by an end wall (24).

## Revendications

1. Raccord enfichable pour conduites rigides et souples à section transversale de matériau renforcée, composé d'une tubulure (1) qui forme au moins un épaulement d'enclenchement (2) avec un biseau (3), et d'un élément d'emboîtement (7) qui est apte à être verrouillé avec la tubulure et qui porte au moins un ressort d'enclenchement (9) avec des branches d'enclenchement (10) qui s'enclenchent derrière ledit épaulement (2) de la tubulure (1)., étant précisé qu'une étanchéité du raccord enfichable est réalisée grâce à une bague d'étanchéité (12) qui est montée dans l'élément d'emboîtement (7) et qui comprend une branche de base et une lèvre d'étanchéité (13) dirigée en biais vers l'intérieur, la bague d'étanchéité (12) s'appliquant de manière étanche, avec sa lèvre d'étanchéité (13) dirigée en biais vers l'intérieur, contre le biseau (3) de l'épaulement d'enclenchement (2) de la tubulure (1), étant précisé que l'élément d'emboîtement (7) se compose d'un manchon extérieur (15) et d'un manchon intérieur (14) dirigé globalement axialement et formant une surface de réception radialement intérieure pour un tuyau (16) pourvue d'un bord retourné radialement intérieur (18) qui définit avec une surface d'application radialement extérieure (19) du manchon intérieur (14) un logement pour recevoir la branche de base de la bague d'étanchéité (12), et étant précisé que l'élément d'emboîtement (7) est à double paroi (21, 26) au moins dans la zone d'ouvertures de ressort d'enclenchement (8), **caractérisé en ce que** le bord retourné (18) est à double paroi et est situé radialement à l'intérieur en face de la surface d'application radialement extérieure (19).

2. Raccord selon la revendication 1, **caractérisé en ce que** les doubles parois (21, 26) sont écrasées au moins dans la zone des ouvertures de ressort d'enclenchement (8).

3. Raccord selon la revendication 1 ou 2, **caractérisé en ce que** les doubles parois (21, 26), en dehors de la zone de ces ouvertures de ressort d'enclenchement (8), présentent un écartement mutuel plus grand, sont parallèles, à cet endroit, et sont reliées entre elles par une paroi frontale orientée dans le sens radial.

4. Raccord selon l'une des revendications 1 à 3, **caractérisé en ce que** le ressort d'enclenchement (9) a une forme un U et deux verrouillages opposés sont formés par les branches d'enclenchement (10) parallèles du ressort d'enclenchement (9), et **en ce que** les branches d'enclenchement (10) du ressort d'enclenchement (9) passent à travers des ouvertures de ressort d'enclenchement parallèles (8) prévues dans l'élément d'emboîtement (7).

5. Raccord selon l'une des revendications 1 à 4, **caractérisé en ce qu'**un troisième point d'enclenchement est formé par un étrier d'enclenchement (5) qui est disposé sur le ressort d'enclenchement (9), qui passe à travers une ouverture d'étrier d'enclenchement associée (6) prévue dans l'élément d'emboîtement (7), qui est dirigé vers le biseau (3) de l'épaulement d'enclenchement (2) de la tubulure (1) et qui s'enclenche derrière ledit épaulement (2).

6. Raccord selon l'une des revendications 1 à 5, **caractérisé en ce que** le logement pour la branche de base de la bague d'étanchéité (12) est limité radialement vers l'extérieur par une surface d'application cylindrique (19) du manchon intérieur (4) qui se prolonge elle-même, par l'intermédiaire d'une surface inclinée (20), par la double paroi (21, 26) située à l'avant dans le sens axial.

7. Raccord selon la revendication 6, **caractérisé en ce que** dans la zone de la double paroi (21, 26), le manchon intérieur (14) est retourné et se prolonge sous la forme du manchon extérieur (15).

8. Raccord selon l'une des revendications 1 à 7, **caractérisé en ce que** la double paroi (21, 26) est écrasée dans la zone des ouvertures de ressort d'enclenchement (6, 8) et s'étend, par l'intermédiaire des zones de transition (23, 25) qui la prolongent latéralement, jusque dans les manchons intérieur et extérieur (14, 15) parallèles et espacés l'un de l'autre, cette zone étant reliée par une paroi frontale (24).
